# EUROPÄISCHE PATENTSCHRIFT

(11) **EP 2 431 253 B1**
(45) Veröffentlichungstag und Bekanntmachung des Hinweises auf die Patenterteilung: **04.12.2019**
(21) Anmeldenummer: 11180830.9
(22) Anmeldetag: 09.09.2011
(51) Int. Cl.: B62B 3/02, B62B 3/10, B62B 3/16

(54) **Modulares Transportgestell**
Modular transport structure
Structure de transport modulaire

(30) Priorität: 15.09.2010 DE 102010037568
(43) Veröffentlichungstag der Anmeldung: 21.03.2012
(73) Patentinhaber: KMK Metallwerke GmbH, 88486 Kirchberg / Iller (DE)
(72) Erfinder:
(74) Vertreter: Hutzelmann, Gerhard

(56) Entgegenhaltungen:
- EP-A1- 1 437 283
- DE-A1-102009 004 302
- DE-U1- 20 219 619
- GB-A- 2 190 895
- US-A- 3 689 098
- US-B1- 6 979 005

## Beschreibung

Die Erfindung bezieht sich auf ein modulares Transportgestell gemäß dem Oberbegriff des Hauptanspruches.

Es sind verschiedenste derartige Transportgestelle bekannt, die jedoch entweder alle sehr unflexibel sind und damit nur für eine Anwendung genutzt werden können, oder die instabil sind und deswegen im rauhen Produktionsalltag nur schlecht einsetzbar sind.

Beispielsweise ist dem Oberbegriff des Hauptanspruches entsprechend aus der EP 1 437 283 A1 ein Transportwagen für Reinigungsutensilien bekannt, bei dem auf eine Plattform verschiedene Gestelle aufgebaut werden können.

Aus der US 3 689 098 A ist entsprechend dem Oberbegriff des Hauptanspruches ein Transportwagen mit einer Plattform bekannt, auf die vertikale Stützen aufgebaut werden können.

Zudem ist aus der DE 10 2009 004 302 A1 ein Transportwagen bekannt, der modular aufgebaut ist.

Aufgabe der Erfindung ist es, Transportgestelle vorzuschlagen, die einerseits flexibel einsetzbar, platzsparend zu lagern und dennoch robust sind. Zudem sollen diese Transportgestelle für eine Vielzahl von Transportaufgaben und damit sehr flexibel nutzbar sein.

Diese Aufgabe wird erfindungsgemäß durch die Merkmale des Hauptanspruches gelöst.

Beim Erfindungsgegenstand sind über die Tragplatte eine Vielzahl von Durchbrechungen und/oder Gewindebohrungen verteilt angeordnet, die in einem vorgegebenen Raster angeordnet sein können. Am vorderen und hinteren Ende der Tragplatte ist wenigstens eine Ausnehmung, Kupplung oder dergleichen vorgesehen, in die wahlweise eine Zugdeichsel, ein Handgriff oder dergleichen eingreifend angeordnet ist.

Damit kann die Tragplatte flexibel und für eine Vielzahl von Transportaufgaben genutzt werden. Die Kombination mehrerer Tragplatten miteinander ist denkbar um eine größere Grundfläche zu bilden. Hierbei kann das Breiten zu Längenverhältnis der Tragplatten so abgestimmt sein, daß beispielsweise drei Plattenbreiten der doppelten Länge der Tragplatte entsprechen. So lässt sich zum Beispiel aus drei nebeneinander angeordneten Platten und zwei längs ausgerichteten Tragplatten eine größere Tragplattenkonstruktion bilden, deren Längen zu Breitenverhältnis wieder dem einer einzelnen Tragplatte entspricht. Durch den wahlweise eingesetzten Handgriff oder die eingesetzte Deichsel kann das Transportgestell sehr einfach bewegt werden. Auch die Kopplung mehrerer Transportgestelle zu Zügen, die eine sehr gut optimierte Logistik im Unternehmen ermöglichen, ist denkbar.

Eine sehr vorteilhafte Weiterbildung der Erfindung liegt vor, wenn im Bereich der Seitenkanten der Tragplatte Wangen vorgesehen sind, die nach unten ragen und die mit Durchbrechungen und/oder Gewindebohrungen ausgerüstet sein können.

Dabei hat es sich als sehr vorteilhaft erwiesen, wenn wenigstens drei Rollen, vorzugsweise wenigstens vier Rollen an der Unterseite der Tragplatte vorgesehen sind, wobei eine oder ein Paar nebeneinander liegender Rollen als feststehende Bockrollen und eine weitere Rolle oder ein weiteres Rollenpaar als Lenkrollen ausgebildet ist.

Durch eine solche Ausgestaltung lässt sich die Tragplatte sehr einfach auch auf engstem Raum manövrieren und leicht von einem Ort an einen anderen bewegen. Dabei ist es auch denkbar, daß anstatt eines Rollenpaares auch mehr als zwei Rollen vorgesehen sind. Zudem ist es denkbar, daß auch alle Rollen als Lenkrollen ausgebildet sind.

Sehr vorteilhaft ist es erfindungsgemäß auch, wenn Winkel, Stützen und/oder Träger vorgesehen sind, die ebenfalls Ausnehmungen und/oder Gewindebohrungen in vorgegebenen Verteilung aufweisen, die auf der Bodenplatte als unterstes aufsetzen und eine Tragkonstruktion im Raum bilden.

Hierdurch kann das Transportgestell für die unterschiedlichsten Gegenstände und Kombinationen von Gegenständen eingesetzt werden. Zudem kann das Transportgestell durch verschiedene Kombinationen jederzeit an andere Gegenstände angepasst werden.

Äußerst vorteilhaft ist es erfindungsgemäß auch, wenn Aufnahmen bzw. Halter für Gegenstände wie zum Beispiel Laufzettel,fertige Produkte, Werkzeuge, Vorrat, Logistikbehälter oder dergleichen vorgesehen sind.

Damit kann der ganze Produktionsablauf sicherer gestaltet werden. Eine fortwährende Überprüfung des Produktionststandes bzw. der Vollständigkeit der auf dem Transportgestell vorgesehenen Gegenstände kann problemlos und effizient durchgeführt werden.

Erfindungsgemäß hat es sich auch als sehr vorteilhaft erwiesen, wenn Befestigungseinrichtungen vorgesehen sind, die ein Verrutschen, Beschädigen oder Herausfallen der Gegenstände, wie zum Beispiel Laufzettel,fertige Produkte, Werkzeuge, Vorrat, Logistikbehälter oder dergleichen, verhindern.

Damit werden die Gegenstände auf dem Transportgestell zum Beispiel während eines Transportes vor Beschädigung gesichert.

Gemäß einer weiteren Ausgestaltung der Erfindung ist es auch sehr vorteilhaft, wenn die Tragplatte mit weiteren Tragplatten und/oder Winkeln, Stützen, Trägern mit Schrauben und/oder Bolzen lösbar verbunden ist.

Durch den Einsatz von Schrauben und/oder Bolzen können die Tragplatten,

Winkel, Stützen, Träger sehr einfach, flexibel und dennoch fest miteinander verbunden werden. Ebenfalls denkbar ist der Einsatz von sogenannten Einhand-Spannbolzen. Das Gestell kann so auch leicht wieder zerlegt und/oder umgebaut werden und ist somit für vielfältigste Aufgaben wiederverwendbar. Zudem ist es denkbar, daß mit Hilfe der Winkel, Stützen und Träger eine weitere Tragplatte oberhalb einer ersten Tragplatte angeordnet wird und so eine erhöhte Arbeitsebene geschaffen wird. Diese erhöhte Arbeitsebene erleichtert gerade bei kleinen Gegenständen das Arbeiten. Ebenfalls ist es denkbar, daß eine erhöhte Arbeitsebene durch Winkel, Streben und Träger gebildet wird. Auf dieser Arbeitsebene kann auch eine Tischplatte beispielsweise als Arbeitstisch angeordnet werden. Als Streben und Träger kann auch ein Rohrsystem eingesetzt werden.

Dabei hat es sich als sehr vorteilhaft erwiesen, wenn die Zugdeichsel, der Handgriff oder dergleichen in eine Ausnehmung eingreift oder durch diese hindurchgreift und sich an der Unterseite der Tragplatte mittelbar oder unmittelbar abstützt.

Damit wird die Zugdeichsel bzw. der Handgriff sehr sicher am Transportgestell befestigt. Ein versehentliches Herausrutschen ist nicht möglich, wenn der Handgriff durch die Tragplatte hindurchgreift. Dabei kann dieser einen Ansatz aufweisen, der sich auf der Unterseite abstützt. Dennoch kann die Verbindung auf einfache Art und Weise mit einem einzigen Handgriff gelöst werden. Ebenso ist es denkbar, daß der Handgriff durch einen Bolzen oder dergleichen auf der Unterseite der Tragplatte gesichert wird.

Gemäß einer weiteren Ausgestaltung der Erfindung ist es auch sehr vorteilhaft, wenn zwischen zwei aufeinanderfolgenden Transportgestellen jeweils eine Zugdeichsel mit vorbestimmter Länge vorgesehen ist.

Damit wird einerseits die Zuglänge aber auch vor allem der Kurvenradius definiert. Durch eine definierte Abstimmung der Länge der Zugdeichsel in Bezug auf Länge und Drehbarkeit zum einen oder anderen Wagen des Zuges kann ein Zug aus mehreren Transportgestellen spurtreu laufen. Bei einem Zug aus Wagen, bei denen in Fahrtrichtung vorne Lenkrollen angeordnet sind und hinten starre Bockrollen hat es sich als zweckdienlich erwiesen, daß die Zugdeichsel am vorausfahrenden Wagen nicht drehbar befestigt wird und am nachfolgenden Wagen drehbar gelagert ist.

Eine sehr vorteilhafte Weiterbildung der Erfindung liegt auch vor, wenn wenigstens zwei Aufnahmen auf der Oberseite der Tragplatte vorgesehen sind, in die die Räder einer weiteren Tragplatte eingreifen können.

Dabei ist es äußerst vorteilhaft, wenn die Aufnahmen als Vertiefungen ausgebildet sind, wobei wenigstens für ein Radpaar als Laufschienen und für wenigstens ein weiteres Rad eine Vertiefung mit Stop-Funktion vorgesehen sein kann.

Damit lassen sich mehrere Transportgestelle bzw. zumindest deren Tragplatten auf einfache Art und Weise platzsparend stapeln. Die Tragplatte wird einseitig auf die dann darunterliegende Platte gehoben und in den Laufschienen weitergeschoben. Erst dann wird die zweite Seite angehoben. Durch diese zweiteilige Vorgehensweise wird die erforderliche Kraft äußerst gering.

Gemäß einer weiteren Fortbildung der Erfindung ist es auch äußerst vorteilhaft, wenn die Abmessungen der Tragplatte auf bestehende Transportmittel wie LKW, Bahnwaggons, Überseecontainer oder dergleichen abgestimmt sind und auch Kombinationen mehrerer Tragplatten hierfür geeignet sind, wobei diese auch übereinander stapelbar ausgebildet sein können.

Damit lassen sich modular mehrere Transportgestelle zusammenbauen, die aber dennoch sehr gut und platzsparend mit den darauf befindlichen Gütern transportiert werden können. Wenn an den vier Ecken der Tragplatte Stützen vorgesehen werden, die an ihrem oberen Ende Aufnahmen für die Rollen einer weiteren Tragplatte aufweisen, lassen sich auch mehrere Tragplatten sehr leicht übereinander stapeln. Es ist auch denkbar, daß normale Stützen an einer Tragplatte vorgesehen werden, d.h. ohne Aufnahmen für Rollen, dann aber eine weitere Tragplatte mit Füßen, Kufen oder Stapleraufnahmen darüber gestapelt wird.

Erfindungsgemäß sehr vorteilhaft ist es auch, wenn der Handgriff abgewinkelt ausgebildet ist.

Hierdurch lässt sich sich die Handhabung der Transportgestelle nochmals vereinfachen.

Äußerst vorteilhaft ist es auch, wenn der Handgriff als Hebeeinrichtung für die Tragplatte und das gesamte Transportgestell ausgebildet ist.

Durch eine solche Ausgestaltung können die Transportgestelle auf einfache Art und Weise auch über Schwellen bewegt werden. Zudem wird das Stapeln von Transportgestellen bzw. Tragplatten alleine nochmals vereinfacht.

Im folgenden wird die Erfindung anhand mehrerer Ausführungsbeispiele veranschaulicht.

Dabei zeigen:
- Fig. 1: ein Transportgestell mit einer Tragplatte und darauf aufgebauten Stützen,
- Fig. 2: ein weiteres Transportgestell mit einer Tragplatte und darauf aufgebauten Stützen,
- Fig. 3: ein drittes Transportgestell mit einem weiteren Aufbau,
- Fig. 4: eine aus mehreren Tragplatten zusammengefügte Ebene

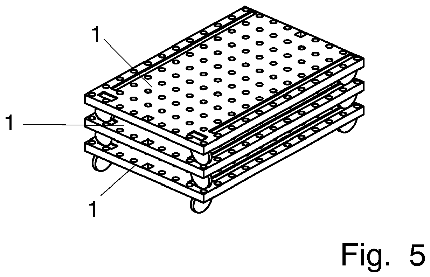

- Fig. 5: gestapelte Tragplatten,

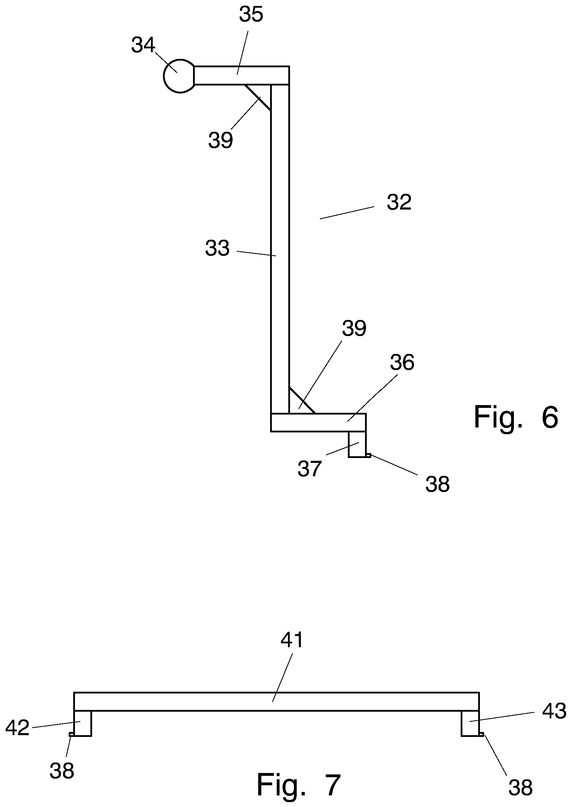

- Fig. 6: eine Seitenansicht eines Handgriffes,
- Fig. 7: eine Deichsel und

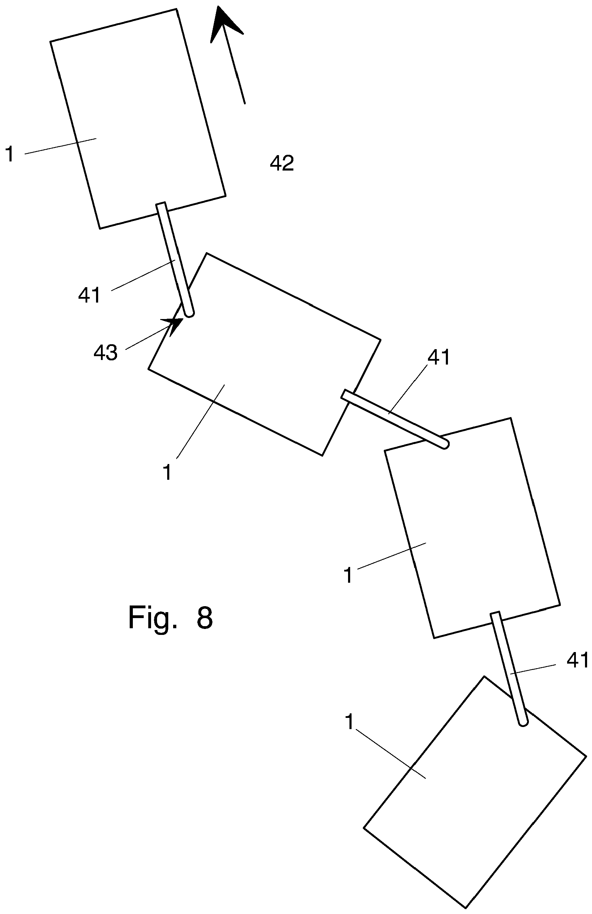

- Fig. 8: ein aus mehreren Tragplatten aufgebauter Zug.

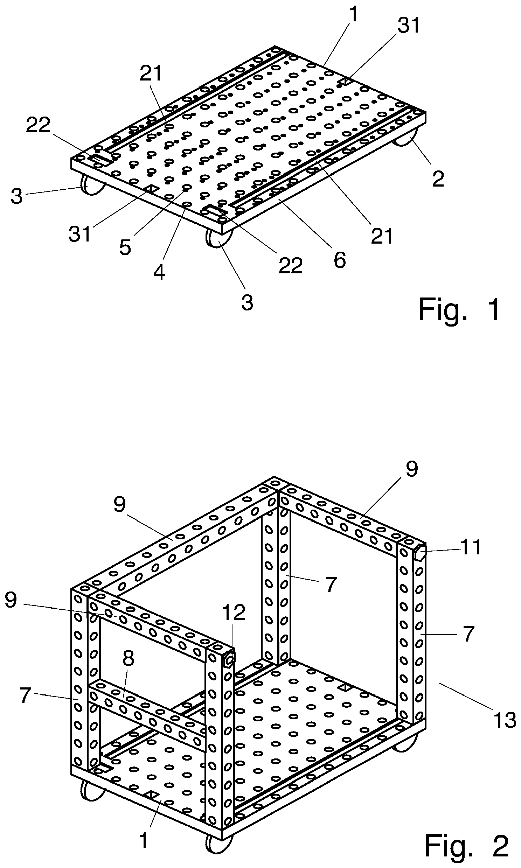

Mit 1 ist in Fig. 1 eine Tragplatte bezeichnet. Diese Tragplatte weist eine größere Länge als Breite auf. Andere Längen-Breiten-Verhältnisse sind denkbar. An der einen Schmalseite der Tragplatte sind an der Unterseite zwei Bockrollen 2 angeordnet, wohingegen an der gegenüberliegenden Schmalseite zwei Lenkrollen 3 vorgesehen sind. Eine Ausrüstung ausschließlich mit Lenkrollen 3 ist ebenfalls denkbar. Auch ist es denkbar, daß arretierbare Rollen eingesetzt werden, die wahlweise als Bockrollen oder als Lenkrollen funktionieren. Die Rollen können eine Bremsfunktion beispielsweise in der Art einer manuellen Feststellbremse aufweisen. Es sind aber auch Tragplatten 1 denkbar, die keine Rollen auf der Unterseite aufweisen und stattdessen mit Füßen, Kufen und/oder Stapleraufnahmen ausgerüstet sind. Kombinationen sind denkbar.

Die Tragplatte 1 ist auf ihrer Oberseite mit Durchgangsbohrungen 4 versehen, die in einem regelmäßigen Muster angeordnet sind.

Zusätzlich können auch Gewindebohrungen 5 vorgesehen sein, die ebenfalls in einem regelmäßigen Muster angeordnet sein können. Es ist aber auch denkbar, daß die Gewindebohrungen einzelne Plätze des Musters aus Durchgangsbohrungen 4 ersetzen. Hierzu können beispielsweise Muttern in die Bohrungen eingepresst oder anderweitig eingesetzt sein.

An der Tragplatte 1 können an allen oder einzelnen Seiten auch Wangen 6 angeordnet sein, die in dem in Fig. 1 dargestellten Ausführungsbeispiel nach unten ragen.

In diesen Wangen 6 können weitere Durchgangsbohrungen 5 oder Gewindebohrungen 6 vorgesehen sein, die dem Muster auf der Oberseite entsprechend angeordnet sein können.

Auf der Tragplatte 1 sind Stützen 7, Streben 8, Träger 9, aber auch Winkel oder Rohre 10 anordenbar.

Diese werden mit Hilfe von Schrauben 11, die entweder in Gewindebohrungen 6 eingeschraubt werden, oder die durch Muttern 12 fixiert sind, gehalten. Auch der Einsatz von Spreizbolzen, Splinten, Einhandbolzen oder dergleichen ist denkbar.

Im in Fig. 2 dargestellten Beispiel sind vier Stützen 7 auf der Tragplatte 1 aufgesetzt. Zwischen den an einer Seitenkante der Tragplatte angeordneten Stützen 7 ist auf halber Höhe eine Strebe 8 und auf voller Höhe ein Träger 9 vorgesehen. In diesem Ausführungsbeispiel sind die Strebe 8 und der Träger 9 baugleich. Andere Ausführungsformen sind denkbar.

Das aus der Tragplatte 1, den Stützen 7 und der Strebe 8 und dem Träger 9 gebildete Gestell 13 kann dazu eingesetzt werden, daß Gegenstände angelehnt und transportiert werden können.

Durch die vier Stützen 7 und die drei Träger 9 ergibt sich eine Ebene, auf die Gegenstände aufgelegt werden. Zusätzlich können auch Gegenstände an den Stützen 7 und den Trägern 9 angelehnt werden.

Es ist auch denkbar, daß die Bohrungen 5 auf den Durchmesser von Rohren 10 abgestimmt sind, wie sie zum Aufbau gebräuchlicher Gestelle üblich sind.

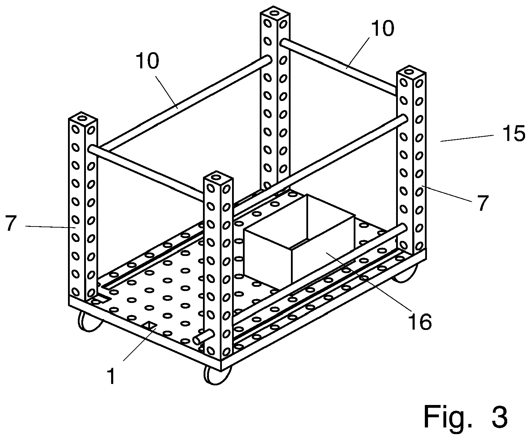

So lassen sich auf einfache Art und Weise auch komplexere Gestelle 15 aufbauen, wie eines beispielhaft in Fig. 3 dargestellt ist.

Hier sind mehrere Möglichkeiten geschaffen, Gegenstände in durch zwei Tragplatten 1 definierte Gestell einzustellen.

Durch eine spezifische Aufteilung eines Gestells 13 oder 15 wird nicht nur die Möglichkeit geschaffen, in einer Produktion geschaffene Gegenstände sicher zu transportieren, sondern es besteht zugleich eine leicht erfassbare optische Kontrolle, ob alle dazu gehörenden Einzelteile des Gegenstandes auf dem Gestell vorhanden sind. Somit wird ständig auf einfache Art und Weise eine Vollständigkeitskontrolle ermöglicht.

Trotzdem werden keine speziell für einen einzigen Gegenstand hergestellte und anderweitig nicht mehr verwendbare Gestelle benötigt.

Vielmehr kann durch eine einfache, aber dennoch genaue Bauanweisung auf jeder beliebigen Tragplatte das für die Produktion eines Gegenstandes benötigte Gestell durch einfache Handgriffe aufzubauen.

Wenn die Gestelle dann nicht mehr für diesen Gegenstand benötigt werden, können die Aufbauten auf der Tragplatte abgebaut werden. Die Tragplatte und auch die Stützen 7, Streben 8, Träger 9 und Rohre 10, ebenso wie nicht dargestellte Winkel oder Klemmeinrichtungen können für andere Projekte wiederverwendet werden.

Zudem können auch für den jeweiligen Produktionsschritt benötigte Teile auf dem Gestell 13 oder 15 gelagert werden, wie dies ebenfalls in Fig. 3 ersichtlich ist. Hierzu sind dort Lagerkästen 16 vorgesehen, die Teile enthalten können.

In diesem Zusammenhang ist es auch denkbar, daß die Lagerkästen 16 nicht wie dargestellt auf der Tragplatte 1 gelagert werden. Vielmehr können diese auch mit Hilfe von Trägern 9, Streben 8 und Rohren 10 in eine optimale Arbeitsposition gebracht werden. Unnötige Arbeiten durch die Mitarbeiter werden so vermieden. Ein ständiges Bücken um Material zu holen entfällt. Dabei ist es denkbar, daß ein Arbeitstisch oder dergleichen in Arbeitshöhe vorgesehen werden kann. Ebenso ist es denkbar, daß eine zweite Tragplatte 1 in einer vorgesehenen Höhe angeordnet ist.

Ebenso ist es denkbar, daß die fertigen Gegenstände auch in optimaler Höhe in das Gestell eingelagert werden.

In den Gestellen können auch spezielle Aufnahmen vorgesehen werden, die zum Beispiel, aus Schaumgummi oder dergleichen bestehen und vorgegebene Öffnungen zum Einstellen von Gegenständen aufweisen, wodurch eine nochmalige Kontrolle auf Vollständigkeit erfolgen kann.

Zudem können an den Gestellen auch Laufzettel, Arbeitsanweisungen, Kennzeichnungen für Produktionsablageplätze oder dergleichen angebracht werden.

Die Anbringung von Werkzeugablagen oder dergleichen ist ebenfalls denkbar.

Die Tragplatten 1 können verschiedene Abmessungen haben. Das Euro-Paletten-Format hat sich aber als besonders empfehlenswert erwiesen, da damit die Ladekapazität von LKW, Containern und auch Waggons besonders gut ausgenutzt wird. Wenn an den vier Ecken der Tragplatte Stützen vorgesehen werden, die an ihrem oberen Ende Aufnahmen für die Rollen einer weiteren Tragplatte aufweisen, lassen sich auch mehrere Tragplatten sehr leicht übereinander stapeln. Es ist auch denkbar, daß normale Stützen an einer Tragplatte vorgesehen werden, d.h. ohne Aufnahmen für Rollen, dann aber eine weitere Tragplatte mit Füßen, Kufen oder Stapleraufnahmen darüber gestapelt wird.

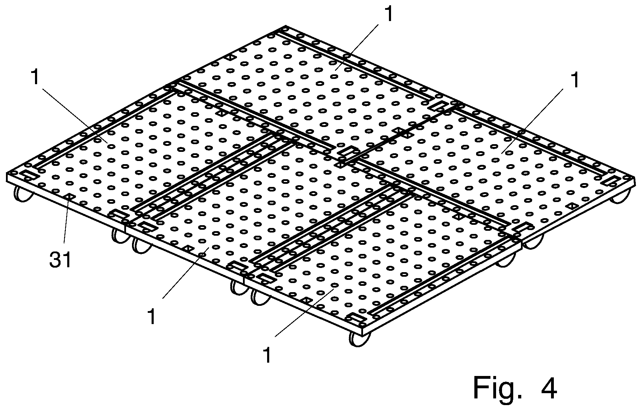

Um aber andererseits auch größere Gegenstände mit den Gestellen handhaben zu können ist es denkbar, wie in Fig. 4 dargestellt, auch mehrere Tragplatten 1 miteinander zu verbinden um eine größere Fläche zu erhalten.

Dazu werden die Tragplatten 1 miteinander verschraubt. Hierzu können dieselben Befestigungsmittel eingesetzt werden, wie zur Befestigung der Stützen 7, der Streben 8, der Träger 9.

Es sind also Schrauben 11, Muttern 12, aber auch Spannbolzen oder dergleichen denkbar.

Die Tragplatten 1 werden dabei durch die in den Wangen 6 vorgesehenen Bohrungen 4 und 5 miteinander verbunden.

Eine Kombination mit bekannten Schweiß- und Zurichttischen und/oder deren Spannmitteln ist denkbar. So kann ein durchgängiges System zur Produktion, zum Transport und auch zur Lagerung und zum Versand geschaffen werden. Es ist in diesem Zusammenhang auch denkbar, daß die Bohrungen der Tragplatte 1, der Stützen 7, der Streben 8 und der Träger 9 auf die Abmessungen und Anordnungen des Schweiß- und Zurichttisches abgestimmt sind. Ebenso ist es denkbar, daß ein solcher auf das System aufgesetzt ist.

Es ergibt sich so eine stabile Ebene, die auch leicht mit Gabelstaplern, Hubwagen oder dergleichen manipuliert werden kann.

Wenn die Gestelle nicht benötigt werden, werden diese abgebaut. Es bleiben dann noch die Tragplatten 1 übrig. Diese lassen sich platzsparend aufeinander stapeln.

Um ein sicheres Stapeln zu ermöglichen, können in den Oberseiten der Tragplatten 1 Schienen 21 eingelassen sein, in die die Bockrollen 2 der darüberliegenden Tragplatte 1 eingreifen können. Zusätzlich können Ausnehmungen 22 vorgesehen werden, in die die Lenkrollen 3 eingreifen können.

Die Ausnehmungen 22 sind dabei im wesentlichen quer zu den Schienen 21 ausgerichtet und entsprechen im Wesentlichen in ihrer Größe der Größe der Lenkrollen 3. Durch die Querausrichtung der Ausnehmungen 22 wird eine sichere und stabile Stapelung ermöglicht. Ein unerwünschtes Verrutschen der Tragplatten 1 zueinander wird vermieden.

Um die Tragplatten 1 nun aufeinander zu stapeln werden diese zunächst auf der Seite mit den Bockrollen 2 angehoben und in die Schienen 21 eingesetzt.

Danach wird die obere Tragplatte 1 gegenüber in Schienenrichtung verschoben, bis die Lenkrollen 3 an der darunter liegenden Tragplatte 1 anstehen. Dann wird auch diese Seite der oberen Tragplatte 1 angehoben und die Lenkrollen 3 in die Ausnehmungen 22 eingesetzt.

Es entspricht nun nicht dem Grundgedanken der vorliegenden Erfindung, der darauf gerichtet ist, auch Produktionsabläufe zu optimieren und gesundheitlich für die Mitarbeiter weniger förderliche Arbeitsschritte zu vermeiden bzw. zu vereinfachen, wenn diese sich zum Stapeln der Tragplatten 1 aufeinander bücken müssen und die Tragplatten in gebückter Haltung anheben müssen. Zusätzlich wurde auch noch nicht beschrieben, wie auf den Tragplatten 1 aufgebauten Gestelle bewegt werden können.

In den Tragplatten sind an den Schmalseiten Öffnungen 31 vorgesehen, in die ein Handgriff 32 einsteckbar ist.

Die Öffnungen 31 sind in diesem Ausführungsbeispiel als annähernd quadratische bzw. quadratische Durchgangsöffnungen ausgebildet und sind mittig an den Schmalseiten angeordnet.

Der Handgriff 32 weist ein im wesentlichen vertikales Standrohr 33 auf, an dessen oberem Ende der eigentliche Handgriff, das Griffstück 34 angeordnet ist. Zwischen dem Standrohr 33 und dem Griffstück 34 kann noch eine Auskragung 35 vorgesehen sein.

Am vom Griffstück 34 abgewandten Ende des Handgriffs 32 ist ein im wesentlichen horizontal verlaufender Absatz 36 vorgesehen, an dem ein Zapfen 37 angeordnet ist, der in die Öffnung 31 einzugreifen vermag.

Am freien Ende des Zapfens 37 ist ein als Vorsprung ausgebildeter Widerhaken 38 angebracht, der sich an der Unterseite der Tragplatte 1 oder in einer in der Öffnung 31 angeordneten und nicht dargestellten Rille einzugreifen vermag. Ebenso ist es denkbar, daß ein Bolzen an der Tragplatte 1 vorgesehen ist, an der sich eine Nut des Zapfens 37 zu verhaken vermag. Es ist aber auch denkbar, daß ein separater Arretierungsbolzen oder dergleichen zur Sicherung des Zapfens 37 vorgesehen sein kann.

Durch diesen Widerhaken 38 wird ein versehentliches Herausrutschen des Handgriffs 32 aus der Öffnung 31 vermieden.

Der Zapfen 37 ist auf die Öffnung 31 abgestimmt und weist einen ebenfalls im wesentlichen quadratischen Querschnitt auf. In Längsrichtung ist der Zapfen 37 jedoch etwas abgeflacht um ein Eingreifen des Widerhakens 38 zu ermöglichen.

Es wird so eine stabile, aber dennoch bei Bedarf lösbare Verbindung zwischen der Tragplatte 1 und dem Handgriff 32 geschaffen.

An den Übergängen zwischen Standrohr 33, Kragarm 35, Absatz 36 und Zapfen 37 können Verstärkungen 39 vorgesehen werden, die diese Winkelübergänge stabilisieren.

Mit dem Handgriff 32 kann die Tragplatte 1 und damit das gesamte Gestell bewegt werden.

Wenn nun mehrere Tragplatten 1 aufeinander gestapelt werden sollen, so kann der erste Schritt des Stapelns, das Aufheben der Seite mit den Bockrollen 2, die am dem Handgriff 32 entgegengesetzten Ende der Tragplatte 1 angeordnet sind, durch einfaches Niederdrücken des Handgriffes erfolgen. Ebenso kann auch die zweite Seite der Tragplatte 1 durch anheben derselben über den Handgriff 32 auf die darunter liegende Tragplatte aufgesetzt werden. Ein Bücken wird damit unnötig.

Versuche haben gezeigt, daß bis zu fünf Tragplatten auf diese Art und Weise problemlos aufeinander gestapelt werden können. Eine zusätzliche Sicherung zum Beispiel durch Verzurren ist beim Transport denkbar.

Es ist vor allem im Hinblick auf die Kombinierbarkeit mehrerer Tragplatten 1 auch denkbar, daß diese mehrere Öffnungen 31 aufweisen, damit der Handgriff 32 variabel eingesetzt werden kann.

In vielen Produktionsumgebungen wird dazu übergangen, Materialien und fertige Gegenstände nicht mehr von Hand zu transportieren, sondern diese halbautomatisch oder automatisch transportieren zu lassen. Hierzu fahren Züge mit beispielsweise Hebeeinrichtungen für Paletten durch die Hallen. Die benötigten Materialien werden abgeladen, die Gegenstände werden aufgeladen.

Oftmals sind diese Züge voll automatisiert.

Mit den erfindungsgemäßen Tragplatten 1 und den Gestellen ist auch eine Verbesserung solcher Produktionsumgebungen denkbar.

Mehrere Tragplatten 1 lassen sich durch Deichseln 41 miteinander verbinden und so ein Zug bilden. Die vorderste Tragplatte 1 wird ebenfalls über eine Deichsel 41 an ein Zugfahrzeug angekoppelt.

Der Zug kann nun durch die Halle fahren.

Um einen reibungslosen Betrieb eines solchen Zuges sicherzustellen weisen die Deichseln 41 unterschiedliche Kupplungsbolzen 42 und 43 auf. Der Kupplungsbolzen 42 sind dabei genauso ausgestaltet wie der Zapfen 37 des Handgriffes 32. Er entspricht in seinem Querschnitt im wesentlichen dem Querschnitt der Öffnungen 31. Dagegen weist der Kupplungsbolzen 43 einen runden Querschnitt auf, so daß sich dieser in der Öffnung 31 drehen kann.

An den freien Enden der Kupplungsbolzen 42 und 43 können ebenfalls Widerhaken 38 vorgesehen sein.

Die Deichsel 41 wird nun für einen spurtreuen Betrieb des Zuges so eingesetzt, daß der nicht drehbare Kupplungsbolzen 42 in die vorausfahrende Tragplatte 1 eingesetzt ist, wohingegen der drehbare Kupplungsbolzen in die nachfolgende Tragplatte 1 eingreift.

Wenn nun noch die Länge der Deichsel 41 auf die Abmessungen der Tragplatten 1 abgestimmt ist, ist ein spurtreuer Betrieb eines aus mehreren Tragplatten aufgebauten Zuges denkbar. Es ist aber auch in Sonderfällen denkbar, daß die Deichsel 41 entgegengesetzt eingebaut ist.

Der Zug fährt nun alle Arbeitsstationen auf seinem Weg nacheinander an. Der jeweils letzte "Wagen" wird dort abgekoppelt. Die damit frei werdenden Deichseln werden beispielsweise auf dem Zugfahrzeug gelagert.

Zum Einsammeln von zum Beispiel fertiger Produkte fährt das Zugfahrzeug alle Stationen auf seinem Weg nacheinander an. Es werden dann jeweils eine oder mehrere "Wagen" am Ende des Zuges angekoppelt. Es ist aber auch denkbar, daß "Wagen" durch Lösen und Anbringen einer Deichsel 41 zwischen andere "Wagen" eingekoppelt werden können. Gleichzeitig kann neues Material an den jeweiligen Bearbeitungsstationen angeliefert werden.

Es ist leicht ersichtlich, daß durch die vorliegende Erfindung nicht nur Arbeitsprozesse direkt optimiert werden, sondern auch indirekt. Zudem wird die Belastung der Mitarbeiter verringert. Trotzdem ist das erfindunsgemäße System äußerst flexibel und kann auf Veränderungen angepasst werden.

Wenn das System wie bereits oben angedeutet auch zum Transport von Gegenständen zum Kunden genutzt wird, so bietet dies auch noch weitere Vorteile. Durch die gute Anpassbarkeit an die benötigten Grundflächen und die gute Anpassung der Tragplatten 1 an bestehende Transportflächen zum Beispiel in LKW können auch oftmals Transportkosten eingespart werden.

Zudem wird durch die Sicherstellung der Vollständigkeit der Lieferung durch die andauernde Überprüfung des Produktionsablaufes und der Gegenstände die Kundenzufriedenheit erhöht.

Die Gestelle lassen sich auch platzsparend und kostengünstig wieder an den Hersteller zurücksenden.

Die auf den Tragplatten 1 angebrachten Aufbauten lassen sich wenigstens teilweise demontieren, so daß diese Aufbauten platzsparend auf den Tragplatten verstaut werden können.

Mehrere Tragplatten lassen sich stapeln.

Damit wird nicht nur das Transportvolumen, sondern auch die benötigten Transportflächen der leeren Gestelle verringert.

## Patentansprüche

1. Modulares Transportgestell zum Transportieren und Lagern von Gegenständen und Gruppen von Gegenständen umfassend:
- eine Tragplatte (1)
- auf der Unterseite der Tragplatte (1) angeordnete Rollen (2,3)
- über die Tragplatte (1) sind eine Vielzahl von Durchbrechungen (4) und/oder Gewindebohrungen (5) verteilt angeordnet
- die Durchbrechungen (4) und/oder Gewindebohrungen (5) können in einem vorgegebenen Raster angeordnet sein,
**dadurch gekennzeichnet, daß**
- am vorderen und hinteren Ende der Tragplatte ist jeweils eine Öffnung (31) vorgesehen, die mittig an den Schmalseiten der Tragplatte angeordnet sind und die als annähernd quadratische oder quadratische Durchgangsöffnungen ausgebildet sind,
- es ist eine Zugdeichsel (41) und ein Handgriff (32) vorgesehen,
- die Zugdeichsel (41) und der Handgriff (32) sind wahlweise in die Öffnungen (31) eingreifend.

2. Modulares Transportgestell nach Anspruch 1, **dadurch gekennzeichnet, daß** im Bereich der Seitenkanten der Tragplatte (1) Wangen (6) vorgesehen sind, die nach unten ragen und die mit Durchbrechungen (4) und/oder Gewindebohrungen (5) ausgerüstet sein können.

3. Modulares Transportgestell nach Anspruch 1 oder 2, **dadurch gekennzeichnet, daß** wenigstens drei Rollen (2,3), vorzugsweise wenigstens vier Rollen (2,3) an der Unterseite der Tragplatte (1) vorgesehen sind, wobei eine oder ein Paar nebeneinander liegender Rollen als feststehende Bockrollen (2) und eine weitere Rolle oder ein weiteres Rollenpaar als Lenkrollen (3) ausgebildet ist.

4. Modulares Transportgestell nach Anspruch 1, 2 oder 3, **dadurch gekennzeichnet, daß** Winkel, Stützen (7), Streben (8) und/oder Träger (9) vorgesehen sind, die ebenfalls Ausnehmungen (4) und/oder Gewindebohrungen (5) in vorgegebenen Verteilung aufweisen, die auf der Tragplatte (1) als unterstes aufsetzen und eine Tragkonstruktion im Raum bilden.

5. Modulares Transportgestell nach einem der Ansprüche 1 bis 4, **dadurch gekennzeichnet, daß** Aufnahmen bzw. Halter für Gegenstände wie zum Beispiel Laufzettel,fertige Produkte, Werkzeuge, Vorrat, Logistikbehälter oder dergleichen vorgesehen sind.

6. Modulares Transportgestell nach einem der vorangehenden Ansprüchen, **dadurch gekennzeichnet, daß** Befestigungseinrichtungen vorgesehen sind, die ein Verrutschen, Beschädigen oder Herausfallen der Gegenstände, wie zum Beispiel Laufzettel, fertige Produkte, Werkzeuge, Vorrat, Logistikbehälter oder dergleichen, verhindern können.

7. Modulares Transportgestell nach einem der vorangehenden Ansprüche, **dadurch gekennzeichnet, daß** die Tragplatte (1) mit weiteren Tragplatten und/ oder Winkeln, Stützen (7), Streben (8), Trägern (9) mit Schrauben (11) und/oder Bolzen lösbar verbunden ist.

8. Modulares Transportgestell nach einem der vorangehenden Ansprüche, **dadurch gekennzeichnet, daß** die Zugdeichsel (41), der Handgriff (32) oder dergleichen in eine Ausnehmung eingreift oder durch diese hindurchgreift, wobei sie sich an der Unterseite der Tragplatte (1) mittelbar oder unmittelbar abstützt.

9. Modulares Transportgestell nach einem der vorangehenden Ansprüche, **dadurch gekennzeichnet, daß** zwischen zwei aufeinanderfolgenden Transportgestellen jeweils eine Zugdeichsel (41) mit vorbestimmter Länge vorgesehen ist.

10. Modulares Transportgestell nach einem der vorangehenden Ansprüche, **dadurch gekennzeichnet, daß** wenigstens zwei Aufnahmen auf der Oberseite der Tragplatte vorgesehen sind, in die die Räder einer weiteren Tragplatte eingreifen können.

11. Modulares Transportgestell nach Anspruch 10, **dadurch gekennzeichnet, daß** die Aufnahmen als Vertiefungen ausgebildet sind, wobei wenigstens für ein Radpaar Laufschienen (21) und für wenigstens ein weiteres Rad eine Vertiefung (22) mit Stop-Funktion vorgesehen sein können.

12. Modulares Transportgestell nach einem der vorangehenden Ansprüche, **dadurch gekennzeichnet, daß** die Abmessungen der Tragplatte (1) auf bestehende Transportmittel wie LKW, Bahnwaggons, Überseecontainer oder dergleichen abgestimmt sind und auch Kombinationen mehrerer Tragplatten hierfür geeignet sind, wobei diese auch übereinander stapelbar ausgebildet sein können.

13. Modulares Transportgestell nach einem der vorangehenden Ansprüche, **dadurch gekennzeichnet, daß** der Handgriff (32) abgewinkelt ausgebildet ist.

14. Modulares Transportgestell nach einem der vorangehenden Ansprüche, **dadurch gekennzeichnet, daß** der Handgriff (32) als Hebeeinrichtung für die Tragplatte (1) und das gesamte Transportgestell ausgebildet ist.

## Claims

1. Modular transport structure for transporting and storing articles and groups of articles, comprising:
- a support plate (1) and
- rollers (2, 3) arranged on the underside of the support plate (1),
- a plurality of passages (4) and/or threaded bores (5) being arranged in distribution over the support plate (1) and
- the passages (4) and/or threaded bores (5) being able to be arranged in a predetermined grid,
**characterised in that**
- a respective opening (31) is provided at each of the front and rear ends of the support plate, the openings being centrally arranged at the narrow sides of the support plate and being formed as approximately square or as square passage openings,
- a drawbar (41) and a handle (32) are provided and
- the drawbar (41) and the handle (32) are selectably engaged in the openings (31).

2. Modular transport structure according to claim 1, **characterised in that** cheeks which project downwardly and which can be furnished with passages (4) and/or threaded bores (5) are provided in the region of the side edges of the support plate (1).

3. Modular transport structure according to claim 1 or 2, **characterised in that** at least three rollers (2, 3), preferably at least four rollers (2, 3), are provided at the underside of the support plate (1), wherein one roller or a pair of mutually adjacent rollers is or are constructed as a fixed castor or fixed castors (2) and a further roller or a further roller pair is constructed as a swivel roller or swivel rollers (3).

4. Modular transport structure according to claim 1, 2 or 3, **characterised in that** brackets, supports (7), struts (8) and/or girders (9) are provided, which similarly have recesses (4) and/or threaded bores (5) in a predetermined distribution and which are placed on the support plate (1) as lowermost and form a support construction in space.

5. Modular transport structure according to any one of claims 1 to 4, **characterised in that** receptacles or holders for articles such as, for example, dockets, finished products, tools, stock, logistical containers or the like are provided.

6. Modular transport structure according to any one of the preceding claims, **characterised in that** fastening devices are provided, which prevent slipping, damage or dropping out of the articles such as, for example, dockets, finished products, tools, stock, logistical containers or the like.

7. Modular transport structure according to any one of the preceding claims, **characterised in that** the support plate (1) is detachably connected with further support plates and/or brackets, supports (7), struts (8), girders (9) by screws (11) and/or bolts.

8. Modular transport structure according to any one of the preceding claims, **characterised in that** the drawbar (41), the handle (32) or the like engages in a recess or passes through this, wherein it is indirectly or directly supported on the underside of the support plate (1).

9. Modular transport structure according to any one of the preceding claims, **characterised in that** a respective drawbar (41) of predetermined length is provided between two successive transport structures.

10. Modular transport structure according to any one of the preceding claims, **characterised in that** at least two receptacles in which the wheels of a further support plate can engage are provided on the upper side of the support plate.

11. Modular transport structure according to claim 10, **characterised in that** the receptacles are formed as depressions, wherein guide rails (21) can be provided for at least one wheel pair and a depression (22) with a stop function can be provided for at least one further wheel.

12. Modular transport structure according to any one of the preceding claims, **characterised in that** the dimensions of the support plate (1) are matched to existing transport means such as trucks, rail carriages, shipping containers or the like and are also suitable for combinations of several support plates therefor, wherein these can also be constructed to be able to be stacked one above the other.

13. Modular transport structure according to any one of the preceding claims, **characterised in that** the handle (32) is formed to be angled.

14. Modular transport structure according to any one of the preceding claims, **characterised in that** the handle (32) is constructed as a lifting device for the support plate (1) and the entire transport structure.

## Revendications

1. Châssis modulaire de transport conçu pour transporter et stocker des objets et des groupes d'objets, comprenant :
- un panneau de support (1),
- des roulettes (2, 3) implantées à la face inférieure dudit panneau de support (1),
- de multiples perforations (4) et/ou perçages taraudés (5) étant agencé(e)s avec répartition en partie haute dudit panneau de support (1),
- lesdit(e)s perforations (4) et/ou perçages taraudés (5) pouvant être disposé(e)s en un réseau quadrillé préétabli,
**caractérisé par le fait que**
- des orifices (31), respectivement prévus aux extrémités antérieure et postérieure du panneau de support, occupent un emplacement central sur les petits côtés dudit panneau de support et sont réalisés sous la forme d'orifices traversants carrés ou approximativement carrés,
- une barre de couplage (41) et une poignée (32) étant alors prévues,
- lesquelles barre de couplage (41) et poignée (32) pénètrent sélectivement dans lesdits orifices (31).

2. Châssis modulaire de transport selon la revendication 1, **caractérisé par le fait que** des joues (6), prévues dans la région des arêtes latérales du panneau de support (1), font saillie vers le bas et peuvent être munies de perforations (4) et/ou de perçages taraudés (5).

3. Châssis modulaire de transport selon la revendication 1 ou 2, **caractérisé par le fait qu'**au moins trois roulettes (2, 3), de préférence au moins quatre roulettes (2, 3) sont prévues à la face inférieure du panneau de support (1), sachant qu'une roulette, ou une paire de roulettes juxtaposées, se présente(nt) comme une (des) roulette(s) fixe(s) (2) et qu'une roulette supplémentaire, ou une paire supplémentaire de roulettes, se présente(nt) comme une (des) roulette(s) directrice(s) (3).

4. Châssis modulaire de transport selon la revendication 1, 2 ou 3, **caractérisé par** la présence de cornières, de montants d'appui (7), d'entretoises (8) et/ou de supports (9) qui sont semblablement munie(s) de perforations (4) et/ou de perçages taraudés (5), suivant une répartition préétablie, reposent sur le panneau de support (1) occupant un emplacement inférieur extrême, et forment une structure de support dans l'espace.

5. Châssis modulaire de transport selon l'une des revendications 1 à 4, **caractérisé par** la présence respective de logements ou d'organes de retenue dévolus à des objets comme, par exemple, des fiches de pointage, des produits finis, des outils, un stock, des conteneurs de logistique, ou éléments similaires.

6. Châssis modulaire de transport selon l'une des revendications précédentes, **caractérisé par** la présence de dispositifs de fixation aptes à prévenir un ripage, une détérioration ou une chute des objets se présentant, par exemple, comme des fiches de pointage, des produits finis, des outils, un stock, des conteneurs de logistique, ou des éléments similaires.

7. Châssis modulaire de transport selon l'une des revendications précédentes, **caractérisé par le fait que** le panneau de support (1) est relié de manière libérable, par des vis (11) et/ou des boulons, à d'autres panneaux de support et/ou cornières, montants d'appui (7), entretoises (8) ou supports (9).

8. Châssis modulaire de transport selon l'une des revendications précédentes, **caractérisé par le fait que** la barre de couplage (41), la poignée (32), ou une pièce analogue, pénètre dans un évidement ou traverse ce dernier de part en part, sachant qu'elle prend indirectement ou directement appui sur la face inférieure du panneau de support (1).

9. Châssis modulaire de transport selon l'une des revendications précédentes, **caractérisé par le fait qu'**une barre de couplage (41), de longueur prédéterminée, est respectivement prévue entre deux châssis de transport placés en succession mutuelle.

10. Châssis modulaire de transport selon l'une des revendications précédentes, **caractérisé par le fait qu'**au moins deux logements, dans lesquels les roues d'un autre panneau de support peuvent pénétrer, sont prévus sur la face supérieure du panneau de support.

11. Châssis modulaire de transport selon la revendication 10, **caractérisé par le fait que** les logements sont réalisés sous la forme de renfoncements, sachant que des rails de roulement (21), et un renfoncement (22) à fonction d'arrêt, peuvent être prévus, respectivement, au moins pour une paire de roues, et pour au moins une roue additionnelle.

12. Châssis modulaire de transport selon l'une des revendications précédentes, **caractérisé par le fait que** les dimensions du panneau de support (1) sont coordonnées avec des moyens de transport existants tels que des poids lourds, des wagons ferroviaires, des conteneurs maritimes ou objets similaires, et des combinaisons de plusieurs panneaux de support sont également appropriées à cette fin, lesdits panneaux pouvant également être réalisés avec faculté d'empilement les uns sur les autres.

13. Châssis modulaire de transport selon l'une des revendications précédentes, **caractérisé par le fait que** la poignée (32) est de réalisation coudée.

14. Châssis modulaire de transport selon l'une des revendications précédentes, **caractérisé par le fait que** la poignée (32) est conçue en tant que dispositif de levage affecté au panneau de support (1) et à l'intégralité dudit châssis de transport.
